# EUROPÄISCHE PATENTSCHRIFT

(11) **EP 1 249 306 B1**
(45) Veröffentlichungstag und Bekanntmachung des Hinweises auf die Patenterteilung: **28.01.2004**
(21) Anmeldenummer: 02007783.0
(22) Anmeldetag: 06.04.2002
(51) Int. Cl.: B23Q 5/40, B23Q 5/56

(54) **Antrieb für Maschinenaggregate, wie Schlitten, Greifeinrichtungen und dergleichen**
Drive for machine units, such as carriages, gripping devices and the like
Entraînement pour unités de machines, par example chariots, ensembles de serrage ou similaires

(30) Priorität: 10.04.2001 DE 10117948
(43) Veröffentlichungstag der Anmeldung: 16.10.2002
(73) Patentinhaber: Gebr. Heller Maschinenfabrik GmbH, D-72622 Nürtingen (DE)
(72) Erfinder: Kurz, Artur, 73240 Wendlingen (DE)
(74) Vertreter: Kohl, Karl-Heinz

(56) Entgegenhaltungen:
- EP-A- 1 013 373
- DE-A- 3 938 353
- US-A- 4 438 986

## Beschreibung

Die Erfindung betrifft einen Antrieb für Maschinenaggregate, wie Schlitten, Greifeinrichtungen und dergleichen, nach dem Oberbegriff des Anspruches 1.

Die Achsbewegungen von Werkzeugmaschinen sowie die einfachen und zusammengesetzten Linear- und Drehbewegungen von Werkstücken und Werkzeugen müssen wegen der geforderten Genauigkeiten sehr exakt, möglichst ohne Verzögerung und mit hoher Wiederholgenauigkeit den Vorgabewerten aus der numerischen Steuerung folgen, und zwar unabhängig von einwirkenden Gegenkräften, wie Vorschubkraft, Reibung oder Beschleunigungskräften der linear oder rotatorisch bewegten Massen. Die Verfahrgeschwindigkeit und die Beschleunigung müssen dabei möglichst hoch sein, um für genaues Positionieren möglichst wenig Zeit zu benötigen.

Bei bekannten Antriebssystemen treibt ein Drehstrom-Synchronmotor am Maschinengestell eine dort drehbar gelagerte Kugelgewindespindel an. Sie ist in Eingriff mit einer Mutter, die in einem Schlitten oder Ständer drehfest gelagert ist. Schlitten und Ständer sind auf Führungen gegenüber dem Maschinengestell längsverschieblich. In Abhängigkeit von der Hublänge bzw. dem erforderlichen Eilgang des Schlittens liegen für die Spindel und die Mutter unterschiedliche Grenzdrehzahlen vor. Oberhalb bestimmter Schlankheitsgrade oder aus sonstigen konstruktiven Gründen der Kugelgewindespindel kann diese auch drehfest gehalten und die Mutter rotatorisch angetrieben werden.

Es sind auch Antriebe bekannt (EP 1 013 373 A1), die zur Erhöhung der Verfahrgeschwindigkeiten und Beschleunigungen einen zweiten Antriebsmotor zum Antrieb der Gewindespindel oder der Mutter vorsehen.

Es sind ferner Spindelantriebsvorrichtungen bekannt (DE 39 38 353 A1), die mit zwei Spindelantriebsköpfen und einer Spindel mit Rechts- und Linksgewinde auf demselben Gewindespindelabschnitt sowohl translatorische als auch rotatorische Bewegungen ausführen.

Bekannt sind auch Gewindespindeln, die Links- und Rechtsgewinde auf zwei angrenzenden Spindelabschnitten haben und zum mittigen Spannen von Werkstücken eingesetzt werden (Heinrich Matuszewski, Handbuch Vorrichtungen: Konstruktion und Einsatz, Verlag Vieweg, 1986, Seite 123).

Die technischen Grenzen dieses bekannten Antriebssystems liegen in der Grenzdrehzahl der Kugelgewindespindeln und in der Drehzahlgrenze handelsüblicher Servomotoren. Eine Verdoppelung der Verfahrgeschwindigkeit bedingt bei gleicher Spindelsteigung einer Verdoppelung der Motordrehzahl. Steigt der Motordrehzahl dann über die Eckdrehzahl, nimmt das Motordrehmoment prinzipbedingt ab, wodurch zwangsläufig die Beschleunigung sinkt. Ebenso steigt bei Drehzahlverdoppelung die Hochlaufzeit des Motors an. Eine Erhöhung der Gewindesteigung ist möglich, hierbei muß aber der Spindeldurchmesser vergrößert werden, was höhere Massenträgheitsmomente ergeben würde.

Der Erfindung liegt die Aufgabe zugrunde, den gattungsgemäßen Antrieb so auszubilden, daß für hohe Positioniergeschwindigkeiten bei Handlingseinrichtungen und Hochgeschwindigkeitszerspanung bei Werkzeugmaschinen die Beschleunigung sowie die Eilgang- und Vorschubgeschwindigkeiten hoch sind.

Diese Aufgabe wird beim gattungsgemäßen Antrieb erfindungsgemäß mit den kennzeichnenden Merkmalen des Anspruches 1 gelöst.

Mit dem erfindungsgemäßen Antrieb wird das Antriebsmoment über die Gewindespindel eingeleitet. Durch die Gewindespindel mit den beiden Spindelbereichen entgegengesetzter Steigung und der im Raum fest stehenden Mutter wird bei gleicher Motordrehzahl eine Steigerung der Beschleunigung und der Verfahrgeschwindigkeiten des Maschinenaggregates erzielt.

Weitere Merkmale der Erfindung ergeben sich aus den weiteren Ansprüchen, der Beschreibung und den Zeichnungen.

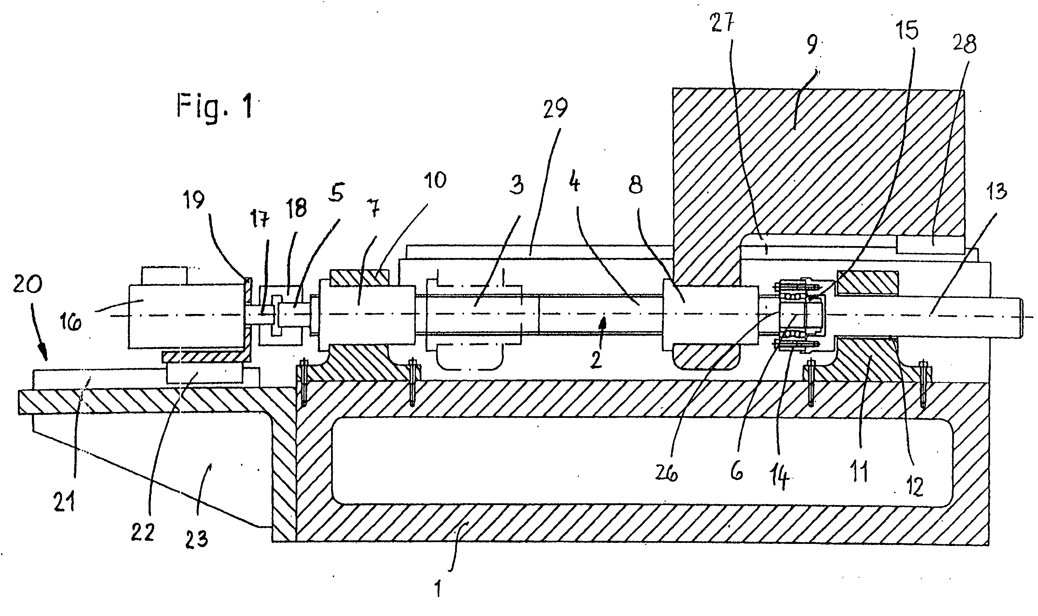

Die Erfindung wird anhand einiger in den Zeichnungen dargestellter Ausführungsformen näher erläutert. Es zeigen
- Fig. 1 bis Fig. 5: jeweils im Schnitt einen erfindungsgemäßen Antrieb für Maschinenaggregate.

Fig. 1 zeigt einen Antrieb, der als Vorschubantrieb ausgebildet ist, mit dem beispielsweise an Werkzeugmaschinen Schlitten bewegt werden. Fig. 1 zeigt eine solche Maschine mit einem Maschinenbett 1, auf dem eine Spindel 2 drehbar gelagert ist. Die Spindel, die beispielsweise eine Kugelgewindespindel sein kann, wird in einer Mutter 7 geführt, die axial und radial fest mit einem Lagerbock 10 verbunden ist, der auf dem Maschinenbett 1 befestigt ist. Mit Abstand von der Mutter 7 sitzt auf der Spindel 2 eine weitere Mutter 8, die in einem Schlitten 9 axial und radial unbeweglich gehalten ist. Die Spindel 2 hat zwei Spindelbereiche 3 und 4, die entgegengesetzte Steigung haben. Der Spindelbereich 3 kann beispielsweise rechtssteigend und der Spindel linkssteigend ausgebildet sein. Dementsprechend sind auch die Steigungsrichtungen der Muttern 7 und 8 vorgesehen. Zum Antrieb der Spindel 2 dient ein Motor 16, dessen Motorwelle 17 fluchtend zur Spindel 2 liegt und mit ihrem Ende 5 über eine Kupplung 18 drehfest verbunden ist. Der Motor 16 ist axial verschiebbar und wird gegen Verdrehen über die gesamte Länge seines Verfahrweges abgestützt. Zur Führung des Motors 16 dient eine Führung 20, die auf einer Konsole 23 befestigt ist, die an einer Seitenwand des Maschinenbettes 1 befestigt ist. Die Führung 20 hat wenigstens eine Führungsbahn 21, die auf der Konsole 23 vorgesehen und auf der wenigstens ein Führungsschuh 22 verschiebbar ist. Er ist an der Unterseite eines Winkels 19 vorgesehen, der den Motor 16 trägt.

An ihrem vom Motor 16 abgewandten Ende 6 ist die Spindel 2 über wenigstens ein Lager 14, vorzugsweise ein Wälzlager, mit einer Achse 13 drehfest verbunden. Das Lager 14 ist durch eine Mutter 15, die auf das freie Spindelende 6 geschraubt ist, axial gesichert. Das Lager 14 liegt unter der Kraft der Mutter 15 an einer Schulter 26 der Spindel 2 an.

Die Achse 13 ist in einem Lagerbock 11 mit wenigstens einem Längslager 12 geführt, das ein Gleit- oder ein Wälzlager sein kann. Da die Spindel 2 in der beschriebenen Weise mittels der beiden Lagerböcke 10, 11 im Bereich beider Enden gelagert ist, wird die Grenzdrehzahl der Spindel 2 erhöht, wodurch hohe Verfahrgeschwindigkeiten ermöglicht werden.

Der Schlitten 9 ist auf seiner dem Maschinenbett 1 zugewandten Unterseite mit einer Ausnehmung 27 versehen, in welcher der Lagerbock 11, das Spindelende 6 und das Lager 14 liegen.

Der Schlitten 9 ist über wenigstens einen Führungsschuh 28 auf einer Führung 29 verschiebbar gelagert, die mit Abstand oberhalb der Führung 20 für den Motor 16 vorgesehen ist. Dadurch wird der Schlitten 9 nicht nur über die Mutter 8 auf der Spindel 2 geführt, sondern auch über den Führungsschuh 28 auf der Führung 29.

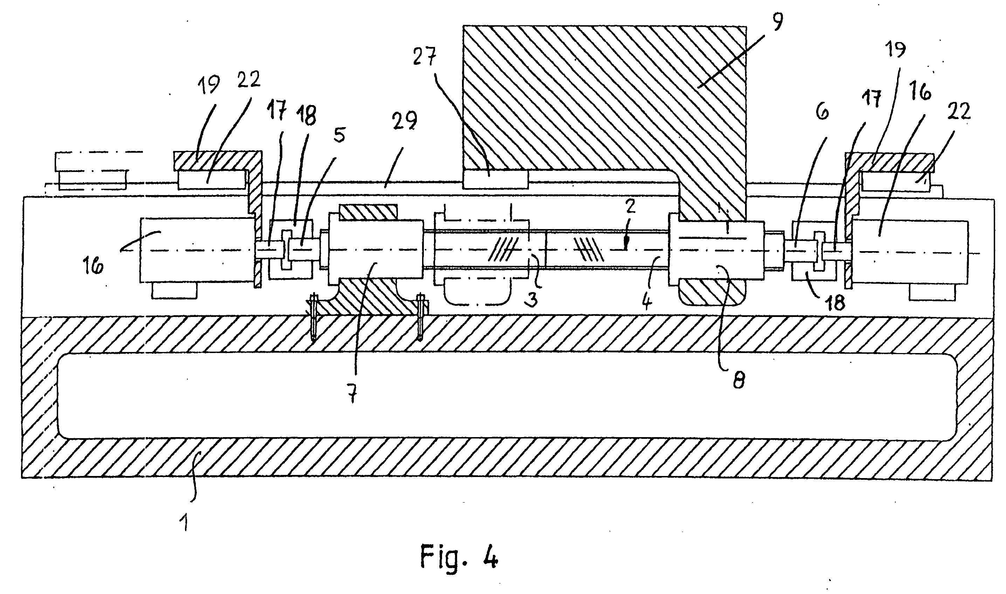

Es ist möglich, die beiden Führungsbahnen 21, 29 einstückig miteinander auszubilden, wie anhand der Ausführungsform von Fig. 4 noch erläutert werden wird. Dann werden der Motor 16 und der Schlitten 9 auf derselben Führungsbahn abgestützt und geführt.

Mit dem Motor 16 wird die Spindel 2 in Drehung versetzt. Der Motor 16 und die weiteren axial fest mit seiner Motorwelle 17 verbundenen Bauteile bewegen sich dabei in axialer Richtung. Aufgrund der Steigungsrichtung von Mutter 8 und Spindelbereich 4, die entgegengesetzt zur Steigungsrichtung von Mutter 7 und Spindelbereich 3 ist, bewegt sich die Mutter 8 bei drehender Spindel 2 mit einer axialen Relativbewegung zur Spindel 2. Die axiale Bewegungsrichtung der Mutter 8 ist dabei identisch mit der axialen Bewegungsrichtung der Spindel 2, erfolgt jedoch mit höherer Geschwindigkeit.

Je nach Drehrichtung der Motorwelle 17 wird der Schlitten 9 in der jeweiligen Richtung auf dem Maschinenbett 1 verfahren. Die auf den Schlitten 9 übertragene Bewegung setzt sich dabei zusammen aus der Axialbewegung der Spindel 2 und der axialen Relativbewegung zwischen der Mutter 8 und der Spindel 2. Durch die additive Überlagerung der Bewegungen ergeben sich hohe Verfahrgeschwindigkeiten und Beschleunigungen.

In Fig. 1 ist mit ausgezogenen Linien die eine Endstellung des Schlittens 9 dargestellt. Mit strichpunktierten Linien ist die andere Endstellung des Schlittens 9 bei maximalem Verfahrweg angedeutet.

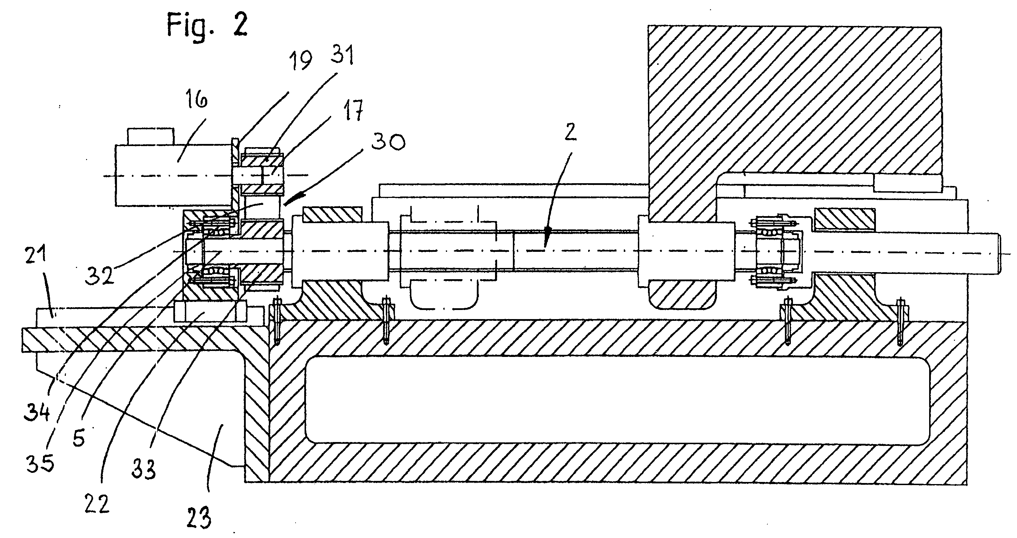

Fig. 2 zeigt eine Ausführungsform, bei der der Motor 16 radial versetzt zur Spindel 2 auf dem Träger 19 vorgesehen ist. In diesem Falle ist die Motorwelle 17 nicht direkt mit der Spindel 2, sondern über ein Getriebe, beispielsweise durch einen Riementrieb 30, verbunden. Auf der Motorwelle 17 sitzt eine Riemenscheibe 31, die über einen Riemen 32 mit einer Riemenscheibe 33 antriebsverbunden ist, die drehfest auf dem Spindelende 5 sitzt. Der Träger 19 ist über den Führungsschuh 22 auf der Führungsbahn 21 auf der Konsole 23 abgestützt. Das Spindelende 5 ist durch wenigstens ein Lager 34, vorzugsweise ein Wälzlager, im Träger 19 drehbar abgestützt. Das Lager 34 ist durch eine Mutter 35 axial gesichert, die auf das freie Ende des Spindelendes 5 geschraubt wird.

Im übrigen ist diese Ausführungsform gleich ausgebildet wie das Ausführungsbeispiel gemäß Fig. 1. Da der Motor 16 nicht axial hinter der Spindel 2 liegt, sondern im Bereich oberhalb der Spindel vorgesehen ist, baut diese Ausführungsform kürzer als das Ausführungsbeispiel nach Fig. 1.

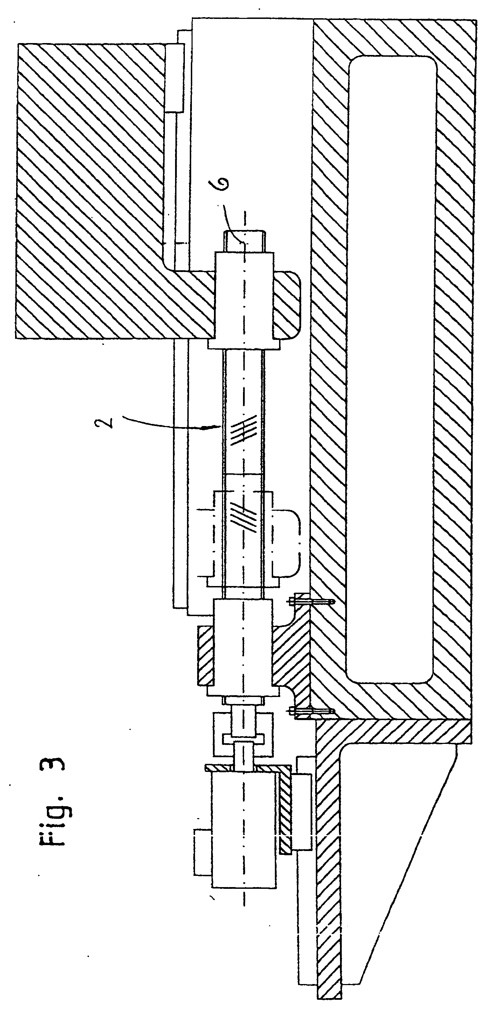

Fig. 3 zeigt ein Antriebssystem, bei dem die Spindel 2 nur an einem Ende gelagert ist. Am Spindelende 6 ist keine Abstützung und Lagerung vorgesehen, so daß der konstruktive Aufbau dieser Ausführungsform einfacher ist als bei den beiden zuvor beschriebenen Ausführungsbeispielen. Im übrigen ist das Antriebssystem nach Fig. 3 gleich ausgebildet wie die Ausführungsform nach Fig. 1. Es ist aber auch möglich, diese einseitige Lagerung der Spindel 2 bei einer Ausführungsform entsprechend Fig. 2 vorzusehen. Das Antriebssystem nach Fig. 3 eignet sich vorteilhaft bei verhältnismäßig kurzen Verfahrwegen. Es können wie bei den vorigen Ausführungsbeispielen hohe Geschwindigkeiten und Beschleunigungen erreicht werden.

Fig. 4 zeigt ein Antriebssystem, bei dem am Spindelende 6 ein zweiter Motor 16 vorgesehen ist. Dadurch wird die Spindel 2 von beiden Enden 5, 6 aus mit jeweils einem Motor 16 angetrieben, der jeweils fluchtend zur Spindel 2 liegt. Die beiden Motorwellen 17 werden jeweils über eine Kupplung 18 mit dem jeweiligen Spindelende 5, 6 drehfest verbunden.

Die beiden Motoren 16 sind jeweils am winkelförmigen Träger 19 montiert, der im Unterschied zur Ausführungsform nach Fig. 1 auf der Führungsbahn 29 mit dem Führungsschuh 22 verschiebbar ist. Der Schlitten 9 ist mit seinem Führungsschuh 27 auf derselben Führungsbahn 29 abgestützt. Die Motoren 16 sind an den vertikal nach unten ragenden Schenkeln der winkelförmigen Träger 19 befestigt und haben geringen Abstand vom Maschinenbett 1.

Die Spindel 2 hat entsprechend den vorhergehenden Ausführungsformen die entgegengesetzte Steigung aufweisenden Spindelbereiche 3, 4, denen jeweils die Muttern 7 bzw. 8 zugeordnet sind. Die beiden Träger 19 liegen spiegelsymmetrisch zueinander, wobei die Motoren 16 gegen die Spindel 2 durch die nach unten ragenden Schenkel der Träger 19 abgedeckt sind. Da die Spindel 2 an beiden Enden drehbar angetrieben wird, können auch schwere Lasten auf dem Schlitten 9 mit hoher Geschwindigkeit und hoher Beschleunigung bewegt werden. In Fig. 4 ist wiederum mit ausgezogenen Linien die eine Endlage und mit strichpunktierten Linien die andere Endlage des Schlittens 9 dargestellt.

Da die Anbindung der Motoren 16 an die beiden Spindelenden 5, 6 durch gleiche Bauteile erfolgt, ergibt sich eine konstruktiv sehr einfache Ausbildung.

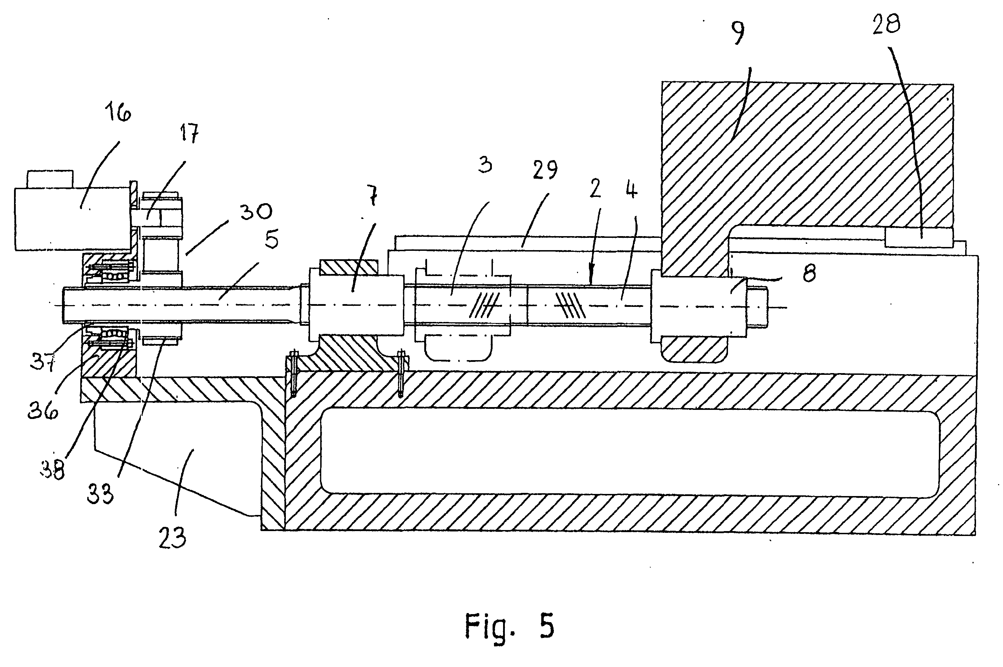

Fig. 5 zeigt ein Antriebssystem, bei dem der Motor 16 über eine Konsole 36 axial unverschieblich auf der Konsole 23 montiert ist. Die Motorwelle 17 ist entsprechend der Ausführungsform gemäß Fig. 2 über den Riementrieb 30 mit dem Spindelende 5 antriebsverbunden. Die auf dem Spindelende 5 befindliche Riemenscheibe 33 ist im Unterschied zur Ausführungsform gemäß Fig. 2 axial fest und ist an einer Hülse 37 vorgesehen, die auf dem als Vielkeilwelle ausgebildeten Ende 5 der Spindel 2 drehfest sitzt. Die Hülse 37 ist über wenigstens ein Lager 38, vorzugsweise ein Wälzlager, drehbar in der Konsole 36 abgestützt.

Wird die Spindel 2 durch den Motor 16 über den Riementrieb 30 gedreht, bewegt sich das Spindelende 5 in axialer Richtung relativ zur axial feststehenden Riemenscheibe 33. Da der Motor 16 mit dem Riementrieb 30 im Gegensatz zu den vorigen Ausführungsbeispielen nicht axial bewegt wird, sind die bewegten Massen gering. Dadurch lassen sich hohe Geschwindigkeiten und Beschleunigungen erzielen. Aus Genauigkeitsgründen ist der Eingriff des als Vielkeilwelle ausgebildeten Spindelendes 5 in die Riemenscheibe 33 durch das vorteilhaft als vorgespannte Linearwälzführung ausgebildete Lager 38 verwirklicht.

Die Spindel 2 ist im übrigen in den Muttern 7, 8 abgestützt, denen die mit entgegengesetzten Steigungen versehenen Spindelbereiche 3 und 4 zugeordnet sind. Der Schlitten 9 ist über den Führungsschuh 28 auf der Linearführung 29 abgestützt. Der Schlitten 9 wird durch Drehen der Spindel 2 entsprechend den vorigen Ausführungsbeispielen verschoben. In Fig. 5 sind die beiden Endstellungen des Schlittens 9 durch ausgezogene sowie durch strichpunktierte Linien angedeutet.

Bei sämtlichen Ausführungsformen können die Spindelbereiche 3, 4 gleiche oder ungleiche Steigung und/oder gleiche oder unterschiedliche Durchmesser und/oder gleiche oder unterschiedliche Länge haben. Durch entsprechende Wahl dieser Größen ist eine optimale Anpassung des Antriebes an den jeweiligen Einsatzfall möglich. Aufgrund der beschriebenen Ausbildung ist der Verfahrweg des Motors 16 bei den verschiedenen Ausführungsformen kleiner als der Verfahrweg des Schlittens 9, vorzugsweise nur etwa halb so groß.

## Patentansprüche

1. Antrieb für Maschinenaggregate, wie Schlitten, Greifeinrichtungen und dergleichen, mit mindestens einer Gewindespindel, die mit wenigstens einem Motor antreibbar ist und auf der Muttern sitzen, von denen mindestens eine mit dem Maschinenaggregat verbunden ist und die in Eingriff mit Spindelbereichen sind, die entgegengesetzte Steigungen haben,
**dadurch gekennzeichnet, daß** eine (7) der beiden Muttern (7, 8) im Raum fest ist, und daß das Antriebsmoment über die Spindel (2) eingeleitet wird.

2. Antrieb nach Anspruch 1,
**dadurch gekennzeichnet, daß** die Spindelbereiche (3, 4) gleiche oder unterschiedliche Steigung haben.

3. Antrieb nach Anspruch 1 oder 2,
**dadurch gekennzeichnet, daß** die Spindelbereiche (3, 4) gleiche oder unterschiedliche Durchmesser haben.

4. Antrieb nach einem der Ansprüche 1 bis 3,
**dadurch gekennzeichnet, daß** die Spindelbereiche (3, 4) gleiche oder unterschiedliche Länge haben.

5. Antrieb nach einem der Ansprüche 1 bis 4,
**dadurch gekennzeichnet, daß** die Spindelbereiche (3, 4) zueinander verdrehfest sind.

6. Antrieb nach einem der Ansprüche 1 bis 5,
**dadurch gekennzeichnet, daß** der Motor (16) mit einem Ende (5, 6) der Gewindespindel (2) antriebsverbunden ist.

7. Antrieb nach einem der Ansprüche 1 bis 6,
**dadurch gekennzeichnet, daß** die Motorwelle (17) des Motors (16) direkt mit dem Spindelende (5, 6) über eine Kupplung (18) drehfest verbunden ist.

8. Antrieb nach einem der Ansprüche 1 bis 6,
**dadurch gekennzeichnet, daß** die Motorwelle (17) des Motors (16) über ein Getriebe (30), vorzugsweise einen Riementrieb, mit dem Spindelende (5, 6) antriebsverbunden ist.

9. Antrieb nach einem der Ansprüche 1 bis 8,
**dadurch gekennzeichnet, daß** die Gewindespindel (2) an beiden Spindelenden (5, 6) von jeweils einem Motor (16) angetrieben ist.

10. Antrieb nach einem der Ansprüche 1 bis 9,
**dadurch gekennzeichnet, daß** die eine Mutter (7) die Gewindespindel (2) führt und axial und radial unbeweglich zu einem Maschinenbett (1) befestigt ist.

11. Antrieb nach einem der Ansprüche 1 bis 10,
**dadurch gekennzeichnet, daß** die eine Mutter (8) im Maschinenaggregat (9) axial und radial unbeweglich angeordnet ist.

12. Antrieb nach einem der Ansprüche 1 bis 11,
**dadurch gekennzeichnet, daß** der Motor (16), die Gewindespindel (2) und weitere mit diesem Antriebsstrang axial fest verbundene Bauteile bei drehender Gewindespindel (2) eine Axialbewegung ausführen.

13. Antrieb nach einem der Ansprüche 1 bis 12,
**dadurch gekennzeichnet, daß** das Maschinenaggregat (9) eine Bewegung ausführt, sobald die Gewindespindel (2) dreht.

14. Antrieb nach einem der Ansprüche 1 bis 13,
**dadurch gekennzeichnet, daß** die Bewegung des Maschinenaggregates (9) aus der Axialbewegung der Gewindespindel (2) und der axialen Relativbewegung zwischen der maschinenaggregatseitigen Mutter (8) und der Gewindespindel (2) resultiert.

15. Antrieb nach Anspruch 14,
**dadurch gekennzeichnet, daß** die Axialbewegung der Gewindespindel (2) und die axiale Relativbewegung zwischen der maschinenaggregatseitigen Mutter (8) und der Gewindespindel (2) einander additiv überlagern.

16. Antrieb nach einem der Ansprüche 1 bis 15,
**dadurch gekennzeichnet, daß** der Motor (16) durch wenigstens eine Führung (20) über seinen Verfahrweg gegen Verdrehen abgestützt ist.

17. Antrieb nach Anspruch 16,
**dadurch gekennzeichnet, daß** die Führung (20) eine hohe Seitenkräfte aufnehmende Linearführung ist.

18. Antrieb nach Anspruch 17,
**dadurch gekennzeichnet, daß** das eine Ende (5) der Gewindespindel (2) als Vielkeilwelle, insbesondere als spielfreie Führung (Wälz- oder sonstige Führung) ausgebildet ist.

19. Antrieb nach einem der Ansprüche 1 bis 18,
**dadurch gekennzeichnet, daß** der Verfahrweg des Motors (16) kleiner ist als der Verfahrweg des Maschinenaggregates (9).

20. Antrieb nach Anspruch 19,
**dadurch gekennzeichnet, daß** der Verfahrweg des Motors (16) etwa halb so groß ist wie der Verfahrweg des Maschinenaggregates (9).

21. Antrieb nach einem der Ansprüche 1 bis 20,
**dadurch gekennzeichnet, daß** die Gewindespindel (2) an beiden Enden (5, 6) gelagert ist.

22. Antrieb nach einem der Ansprüche 1 bis 21,
**dadurch gekennzeichnet, daß** das Maschinenaggregat (9) und der Motor (16) auf derselben Führungsbahn (29) geführt sind.

## Claims

1. Drive for machine units, such as carriages, gripping devices and the like with at least one threaded spindle, which can be driven by at least one motor and on which fit nuts, of which at least one is connected with the machine unit and which are engaged with passages of the spindles which have opposite pitches,
**characterized in that** one (7) of the two nuts (7, 8) is fixed in space and that the drive torque is introduced via the spindle (2).

2. Drive according to claim 1,
**characterized in that** the spindle passages (3, 4) have the same or different pitches.

3. Drive according to claim 1 or 2,
**characterized in that** the spindle passages (3, 4) have the same or different diameters.

4. Drive according to one of the claims 1 to 3,
**characterized in that** the spindle passages (3, 4) have the same or different lengths.

5. Drive according to one of the claims 1 to 4,
**characterized in that** the spindle passages (3, 4) are rotation-fast to each other.

6. Drive according to one of the claims 1 to 5,
**characterized in that** the motor (16) is connected as a drive with one end (5, 6) of the threaded spindle (2).

7. Drive according to one of the claims 1 to 6,
**characterized in that** the motor shaft (17) of the motor (16) is directly connected rotation-fast with the end (5, 6) of the spindle via a clutch (18).

8. Drive according to one of the claims 1 to 6,
**characterized in that** the motor axle (17) of the motor (16) is connected as a drive with the end (5, 6) of the spindle via a transmission (30), preferably a belt drive.

9. Drive according to one of the claims 1 to 8,
**characterized in that** the threaded spindle (2) is driven at both ends (5, 6) of the spindle by one motor (16) in each case.

10. Drive according to one of the claims 1 to 9,
**characterized in that** one nut (7) guides the threaded spindle (2) and is fixed axially and radially immovable to a machine base (1).

11. Drive according to one of the claims 1 to 10,
**characterized in that** the one nut (8) is set up within the machine unit (9) axially and radially immovable.

12. Drive according to one of the claims 1 to 11,
**characterized in that** the motor (16), the threaded spindle (2) and more components, axially firmly connected with this drive train perform an axial movement whilst the threaded spindle (2) is rotating.

13. Drive according to one of the claims 1 to 12,
**characterized in that** the machine unit (9) performs a movement as soon as the threaded spindle (2) rotates.

14. Drive according to one of the claims 1 to 13,
**characterized in that** the movement of the machine unit (9) results from the axial movement of the threaded spindle (2) and the axial relative movement between the nut (8) which is part of the machine unit and the threaded spindle (2).

15. Drive according to claim 14,
**characterized in that** the axial movement of the threaded spindle (2) and the axial relative movement between the nut (8) which is part of the machine unit and the threaded spindle (2) overlap each other cumulatively.

16. Drive according to one of the claims 1 to 15,
**characterized in that** the motor (16) is supported by at least one guideway (20) within its traverse path against torsion.

17. Drive according to claim 16,
**characterized in that** the guideway (20) is a linear guideway, accommodating high lateral forces.

18. Drive according to claim 17,
**characterized in that** the one end (5) of the threaded spindle (2) is formed as multispline shaft, in particular as guide without play (rollerguide or other guide).

19. Drive according to one of the claims 1 to 18,
**characterized in that** the traverse path of the motor (16) is smaller than the traverse path of the machine unit (9).

20. Drive according to claim 19,
**characterized in that** the traverse path of the motor (16) is approximately half as large as the traverse path of the machine unit (9).

21. Drive according to one of the claims 1 to 20,
**characterized in that** the threaded spindle (2) is mounted at both ends (5, 6).

22. Drive according to one of the claims 1 to 21,
**characterized in that** the machine unit (9) and the motor (16) are guided on the same guideway (29).

## Revendications

1. Entraînement pour unités de machines, par exemple chariots, ensembles de serrage ou similaires avec au moins une broche filetée, entraînable par au moins un moteur et sur laquelle sont placés des écrous, desquels au moins un est accouplé à l'unité de machines et lesquels sont engagés avec des zones de broche, qui ont des pas opposés,
**caractérisé en ce que** l'un (7) des deux écrous (7, 8) est fixé dans l'espace et que le couple d'entraînement est provoqué par la broche (2).

2. Entraînement selon la revendication 1,
**caractérisé en ce que** les zones de broche (3, 4) ont le même pas ou différentes pas.

3. Entraînement selon revendication 1 ou 2,
**caractérisé en ce que** les zones de broche (3, 4) ont le même diamètre ou différents diamètres.

4. Entraînement selon une des revendications 1 à 3,
**caractérisé en ce que** les zones de broche (3, 4) ont la même longueur ou différentes longueurs.

5. Entraînement selon une des revendications 1 à 4,
**caractérisé en ce que** les zones de broche (3, 4) sont résistantes à la torsion l'une par rapport à l'autre.

6. Entraînement selon une des revendications 1 à 5,
**caractérisé en ce que** le moteur (16) est entraîné propulsivement avec une extrémité (5, 6) de la broche filetée (2).

7. Entraînement selon une des revendications 1 à 6,
**caractérisé en ce que** l'arbre de moteur (17) du moteur (16) est relié de façon fixe en rotation directement avec l'extrémité de la broche (5, 6) par un embrayage (18).

8. Entraînement selon une des revendications 1 à 6,
**caractérisé en ce que** l'arbre de moteur (17) du moteur (16) est entraîné propulsivement par un engrenage (30), de préférence une transmission à courroie avec l'extrémité de la broche (5, 6).

9. Entraînement selon une des revendications 1 à 8,
**caractérisé en ce que** la broche filetée (2) est entraînée respectivement aux deux extrémités de la broche (5, 6) par un moteur (16).

10. Entraînement selon une des revendications 1 à 9,
**caractérisé en ce que** l'un écrou (7) guide la broche filetée (2) et est fixé axialement et radialement immobile par rapport à un socle de machine (1 ).

11. Entraînement selon une des revendications 1 à 10,
**caractérisé en ce que** l'un écrou (8) est disposé axialement et radialement immobile dans le groupe de machines (9).

12. Entraînement selon une des revendications 1 à 11,
**caractérisé en ce que** le moteur (16), la broche filetée (2) et des éléments supplémentaires connectés fixement sur leur axe avec ce chemin d'entraînement effectuent un mouvement axial, la broche filetée (2) étant en rotation.

13. Entraînement selon une des revendications 1 à 12,
**caractérisé en ce que** le groupe de machines (9) exécute un mouvement dès que la broche filetée (2) tourne.

14. Entraînement selon une des revendications 1 à 13,
**caractérisé en ce que** le mouvement du groupe de machines (9) résulte du mouvement axial de la broche filetée (2) et du mouvement relatif axial entre l'écrou (8) de côté du groupe de machines et la broche filetée (2).

15. Entraînement selon revendication 14,
**caractérisé en ce que** le mouvement axial de la broche filetée (2) et le mouvement relatif axial entre l'écrou (8) de côté du groupe de machines et la broche filetée (2) se superposent par addition l'un à l'autre.

16. Entraînement selon une des revendications 1 à 15,
**caractérisé en ce que** le moteur (16) est supporté sur son déplacement par au moins un guidage (20) contre la torsion.

17. Entraînement selon revendication 16,
**caractérisé en ce que** le guidage (20) est un guidage linéaire recevant des composantes latérales élevées.

18. Entraînement selon revendication 17,
**caractérisé en ce que** l'une extrémité (5) de la broche filetée (2) est formé comme un arbre cannelé à cales multiples, en particulier comme guidage sans jeu (guidage à rouleaux ou guidage quelconque).

19. Entraînement selon une des revendications 1 à 18,
**caractérisé en ce que** le déplacement du moteur (16) est plus petit que le déplacement du groupe de machines (9).

20. Entraînement selon revendication 19,
**caractérisé en ce que** le déplacement du moteur (16) est environ la moitié du déplacement du groupe de machines (9).

21. Entraînement selon une des revendications 1 à 20,
**caractérisé en ce que** la broche filetée (2) est logée à ses deux extrémités (5, 6).

22. Entraînement selon une des revendications 1 à 21,
**caractérisé en ce que** le groupe de machines (9) et le moteur (16) sont guidés sur la même glissière de guidage (29).
